# EUROPEAN PATENT SPECIFICATION

(11) **EP 2 531 014 B1**
(45) Date of publication and mention of the grant of the patent: **26.12.2018**
(21) Application number: 11702232.7
(22) Date of filing: 04.02.2011
(51) Int. Cl.: A01B 79/00, G05D 1/02, G06Q 10/00, G05B 19/418

(54) **IN USE ADAPTATION OF SCHEDULE FOR MULTI-VEHICLE GROUND PROCESSING OPERATIONS**
ANPASSUNG DER PLANUNG VON BODENVERARBEITUNGSARBEITEN MEHRERER FAHRZEUGE WÄHREND EINES EINSATZES
ADAPTATION DE LA PLANIFICATION DÉS OPÉRATIONS DE TRAITEMENTS DE SOL LORS DE L'UTILISATION DE MULTI-VÉHICULES

(30) Priority: 05.02.2010 EP 10152840
(43) Date of publication of application: 12.12.2012
(73) Proprietor: Flanders Make vzw, 3920 Lommel (BE)
(72) Inventor: ALI, Osman, B-3001 Heverlee (BE); VALCKENAERS, Paul, B-3001 Heverlee (BE); SAINT GERMAIN, Bart, B-3370 Boutersem (BE); VERSTRAETE, Paul, B-8800 Roeselare (BE); VAN BELLE, Jan, B-8310 Assebroek (BE)
(74) Representative: CNH Industrial IP Department
(86) International application number: PCT/EP2011/051696
(87) International publication number: WO 2011/095614

(56) References cited:
- DE-A1- 19 514 223
- US-A- 5 631 658
- US-A- 5 646 844
- US-A1- 2008 140 431
- ALIAB O ET AL: "Infield logistics planning for crop-harvesting operations", ENGINEERING OPTIMIZATION, GORDON AND BREACH SCIENCE PUBLISHERS, AMSTERDAM, NL LNKD- DOI:10.1080/03052150802406540, vol. 41, no. 2, 2 February 2009 (2009-02-02), pages 183-197, XP009136054, ISSN: 0305-215X

## Description

### Field of the invention:

This invention relates to methods of controlling outdoor ground processing vehicles of two or more work vehicles, to computer systems for such methods, to work vehicles, and to corresponding programs stored on computer readable media, for carrying out such methods.

### Background:

Many types of ground processing operations using multiple work vehicles are known, such as crop harvesting, earth moving, mineral extraction, road formation and so on. It is known to make schedules for the routes and timings of operations for individual work vehicles. For example, crop-harvesting operations are typically carried out with combine harvesters. The harvested product is transferred to one or more tractor-drawn trailers every time the combine harvester's storage capacity is reached. The efficiency of the overall process can be significantly improved by computing optimal routes and interactions for the harvest vehicles in the field. Furthermore, an automated method (FMTC publication "Infield logistics planning for crop-harvesting operations", O. Ali; B. Verlinden; D. Van Oudheusden, Engineering Optimization, 1029-0273, Volume 41, Issue 2, 2009, Pages 183-197) for generating itineraries for the harvest vehicles facilitates the planning for autonomous agricultural vehicles. The infield logistics problem is formulated as an integer linear programming vehicle routing problem with additional turn penalty constraints, but, because of the high number of decision variables, it is not possible to solve cases of realistic field size. The solution time of the infield logistics problem is considerably reduced by reformulating it as a modified minimum-cost network flow problem. This specific structure allows the exact solution of intermediate-size planning problems in a much shorter time period. The result of solving the infield logistics problem with the proposed modeling approaches is a set of itineraries ('tours'), covering the entire field. Each 'tour' is characterized by the combine harvester's start and end points and the positions where the combine harvester needs to be unloaded. The planning models minimize non-productivity (i.e. the time when a combine harvester travels in a field without harvesting), and can improve coordination between combine harvesters and tractors.

It is also known (US 5646844) to direct the operation of multiple mobile geography-altering machines in three-dimensional space relative to a common work site using three-dimensional position signals and a digitized model of the site. The geography-altering machines are equipped to receive the position signals and determine their instantaneous positions in three-dimensional space as they traverse and alter the site, storing the site model in a digital data storage facility, and generating a common, dynamically-updated site database by updating the site in real time according to the three-dimensional position of each machine relative to the site. Each machine operator accordingly has real time information on the position of each machine operating on the site, and the collective site update information indicating the total work of the machines on the site. Operators can accordingly avoid machine interference or unnecessary overlap of work on the site. Or, they can more effectively coordinate their efforts in altering the site from the actual state to the desired state.

An automatic machine control module can be added to the vehicles, capable of receiving signals from the dynamic database, representing the difference between the actual site model and the desired site model to operate the steering and drive systems of the vehicle, to traverse the site in a manner to bring the actual site model into conformity with the desired site model. As the automatic machine controls operate the steering and drive systems of the machine, the current position and direction of the vehicle can be received, read and manipulated by the dynamic database to update the actual site model.

US 5712782 shows optimizing the operation and use of a number of agricultural machines. During operation of a harvesting machine a central controlling processor can determine what conveying capacity must be prepared for taking on the harvested quantity of grain. With the aid of operating data from the hauler the controlling processor can determine when the required transport capacity is available at the earliest. The controlling processor can transmit transport orders according to choice automatically or at the command of the controlling processor to the driver of the transport unit. According to the availability of the transport capacity the controlling processor can inform the harvesting machine or the operator of the harvester to reduce the grain loss and the fuel consumption by reducing the travel speed. With the aid of the moisture detected by a sensor of the harvesting machine, the controlling processor can estimate the probable drying needs of the grain and compare them with the drying capacity. If the drying capacity is exhausted, the controlling processor can command the harvesting machine to cease operation on the wet grain field and conduct further harvesting in the dry areas. The continuous data transmission from the agricultural machines to the controlling processor allows the work to be performed and the yield positioned in an applying device to be accurately monitored. Geographic and soil structure data of the respective fields can be stored in a coordinate array. With the aid of sensors in the harvesting machine yield, amounts, soil and grain moisture, weeds, stones, etc can be detected and input with the existing data in the controlling processor. With the aid of transmission of position data it is possible to preselect the travel track by the controlling processor so that multiple passes over the same ground surfaces are prevented during a growing season.

US 2008/0140431 A1 and US 5,631,658 describe planning systems for work vehicles in which the plan is adapted during execution of the original plan. US 5,646,844 discloses a system for coordinating the operations of multiple geography-altering machines on a common work site.

### Summary of the Invention:

An object of the invention is to provide alternative methods of controlling outdoor ground processing operations of two or more work vehicles, computer systems for such methods, work vehicles, and corresponding programs stored on computer readable media, for carrying out such methods.

According to a first aspect, the invention provides:
A method of controlling outdoor ground processing operations of two or more work vehicles, the method having the steps of:
- running a computer model of the operations using a number of candidate schedules of the ground processing operations using predicted environmental conditions and predicted work vehicle performance, the operations involving work vehicle movements and work vehicle processing tasks, at least one of the operations for one of the work vehicles being a dependent operation, being dependent on at least one of the operations of another of the work vehicles, the computer model comprising entity service modules of the respective work vehicles, the entity service modules comprising physical characteristics and a dynamic behavior of the respective work vehicles and being hosted in respective vehicle computers located on the respective work vehicles and
   wherein running the computer model comprises running on the respective vehicle computers the respective entity service module using one of the candidate schedules;
- generating an overall schedule for the operations including the at least one dependent operation, according to the results of running the computer model according to the candidate schedules;
- generateing an overall schedule for the operations including the at least one dependent operation, based on the results of running the entity service modules of the respective working vehicles;
- using the overall schedule to control actual execution of the ground processing operations by the work vehicles;
- monitoring the actual execution of the ground processing operations; and
- updating the computer model according to results of the monitoring of the actual execution.

Notably by monitoring actual execution and determining deviations from the predicted environmental conditions or work vehicle performance, it becomes possible to address some of the main disadvantages of known schedules for multiple work vehicles on ground processing operations. In practice it is found that deviations from predictions of environmental conditions and vehicle performance can disrupt the schedules and introduce inefficiencies in ground processing operations. Particularly where some operations are dependent on other work vehicles operations, the efficiency can be improved by adapting the schedule in real time according to actual conditions and performance.

Another aspect provides a corresponding program on a computer readable media, for carrying out such methods.

Another aspect of the invention provides:
an operational planning system for controlling outdoor ground processing operations of two or more work vehicles, the system having: multiple computers arranged to run a computer model of the operations using a number of candidate schedules of the ground processing operations using predicted environmental conditions and predicted work vehicle performance, the operations involving work vehicle movements and work vehicle processing tasks, at least one of the operations for one of the work vehicles being a dependent operation, being dependent on at least one of the operations of another of the work vehicles, the computer model comprising entity service modules of the respective work vehicles, the entity service modules comprising physical characteristics and a dynamic behavior of the respective work vehicles,
at least two of the computers being located on respective ones of the work vehicles and hosting their respective entity service modules, said at least two of the computers being arranged to run their respective entity service module using one of the candidate schedules,
one the computers being arranged to generate an overall schedule for the operations including the at least one dependent operation, based on the results of running the entity service modules on the respective working vehicles; and a communications link for sending the overall schedule to the work vehicles to control actual execution of the ground processing operations by the work vehicles, the computers being operative to update the computer model during the actual execution, the processor being arranged to run the updated computer model according to further candidate schedules during the actual execution depending on the results of the monitoring of the actual execution of the ground processing operations.

Another aspect of the invention provides:
a work vehicle according to claim 14 for use in the operational planning system specified above.

Any features can be added to these aspects. Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig. 1 shows a schematic view of a worksite, vehicles and parts of a computer system according to an embodiment,
Fig. 2 shows a schematic view of a farm worksite,
Fig. 3 shows steps of a method according to an embodiment of the invention,
Fig. 4 shows a schematic view of entities of a computer model according to an embodiment of the invention,
Fig. 5 shows a schematic view of parts of a computer system on a harvester according to an embodiment of the invention,
Fig. 6 shows a schematic view of parts of a computer system for a farm worksite according to an embodiment of the invention,
Fig. 7 shows a graph of tractor and harvester operations according to a schedule according to an embodiment,
Fig. 8 shows a time chart of events relating to entities of a computer system according to an embodiment, and
Fig. 9 shows a graph of dump truck and excavator operations according to a schedule according to an embodiment.

### Description of the Preferred Embodiments:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

### Definitions:

References to a signal can encompass any kind of signal in any medium, and so can encompass an electrical or optical or wireless signal or other signal for example.

References to a processor or to a computer can encompass any means for processing signals or data in any form and so can encompass for example a personal computer, a microprocessor, analog circuitry, application specific integrated circuits, software for the same, and so on.

References to ground processing operations can encompass harvesting crops growing above ground or in the ground, harvesting trees, moving or removing earth, laying roads, mining underground or open cast, preparing groundworks for foundations of structures, and so on.

References to work vehicles can encompass any mobile resources such as harvesters, tractors, trailers, excavators, conveyor belts, road laying vehicles and so on.

References to dependent operations are intended to encompass examples where one operation would be delayed or prevented if the other operation does not occur, and can encompass physical interactions such as refuelling, loading or unloading, bringing spare parts, joining a tractor to a trailer and so on.

References to outdoor can encompass open air sites exposed to weather or underground sites for example.

In the description provided herein, numerous specific details are set forth. However, it is understood that embodiments of the invention may be practiced without these specific details. In other instances, well-known methods, structures and techniques have not been shown in detail in order not to obscure an understanding of this description.

### Introduction to features of embodiments

The dynamic nature of outdoor engineering processes and the inherent uncertainties in their operating environments make the planning for efficient execution increasingly complex. Important information for planning, such as duration of operations, cannot be accurately determined in advance.

Some embodiments of the invention relate to a system for planning and controlling the operations of engineering work vehicles in an outdoor engineering process, and more particularly, to a system for coordinating their operations at a geographically distributed work site to improve utilization of the vehicles as well as the overall performance of the process.

The outdoor engineering processes considered can include for example crop harvesting, mine excavation, road construction, and other processes requiring cooperation among several engineering work vehicles for execution of their operations. The engineering work vehicles used in these processes can include combine harvesters, agricultural tractors, excavators, dump trucks, asphalt layers, road graders and the like. These processes often have a geographically distributed operating environment consisting of several work sites connected with each other via road links. The vehicles involved in a process may operate at geographically distributed locations (e.g., a crop field and a storage depot), but they always work together in complementary manner for the successful completion of the process.

The progress of the process, performance of equipments and operating conditions need to be monitored online and this information should be considered for the current and future operations.

### Holons

Embodiments of the invention can involve a holonic online planning approach for effective operational planning of outdoor engineering processes. Some embodiments can use the PROSA (Product, Resource, Operations, Staff, Architecture) holonic reference architecture as its basis. A holonic system can be defined as a system (or phenomenon) which is an evolving self-organizing dissipative structure, composed of other holons. The word holon describes the hybrid nature of sub-wholes and parts within systems. From this perspective, holons exist simultaneously as self-contained wholes in relation to their sub-ordinate parts, and exist as dependent parts when considered from the inverse direction. So a holon is simultaneously a whole in and itself at the same time being nested within another holon and so is a part of something much larger than itself.

The holonic online planning system is elaborated according to the PROSA reference architecture. It defines the structure and the relationships of the components composing the system. The components of the system correspond to the entities in the planning environment, which are classified according to the reference architecture. The task of planning is decentralised and distributed among the basic components, i.e., the resource holon, the product holon and the order holon. The staff holon is optional and can be used to assist the basic holons by providing them with external knowledge or experts' advice. A brief description of the roles and responsibilities of the basic holons in the system is provided below. More detailed information can be found in (Valckenaers, P., Van Brussel, H., 2005. Holonic manufacturing execution system. CIRP Annals - Manufacturing Technology Vol.54(1), 427-432).

A *resource holon* corresponds to a resource in the underlying processing environment, which it reflects in the planning system. A resource, in the planning environment, is an entity characterised by its utility, quantity and availability in a processing environment. In an outdoor engineering process, the resources include both moving as well as stationary physical entities, i.e., the engineering vehicles and the work site respectively. A *product holon* corresponds to an operations recipe and contains technical knowledge along with the quality requirements of a process. It holds details about how to execute a process with a sufficient level of accuracy. In a processing system, the product holon specifies a valid sequence of operations. It also provides operation details to the resources and evaluates the quality of execution.

An *order holon* corresponds to the tasks or operations that need to be executed. It ensures that the process is completed in time and all its requirements are fulfilled. The order holon consults the product holon to manage the execution of operations by the resources.

The online planning is achieved through active communication between the system holons. The product and the resource holons share the process knowledge, i.e., the operating information to perform operations with the resources. The order holon and product holon share the production knowledge, i.e., the procedure to complete a process with a sufficient level of accuracy. The order and the resource holons share the process execution knowledge, i.e., the information about the execution of operations. For coordination purposes, the system uses an ant colony inspired mechanism. The PROSA holons create delegate objects (called ants) to facilitate information exchange during the planning and control stages. Elaborate details of the ant colony inspired coordination mechanism can be found in (Valckenaers and Van Brussel, 2005).

The planning is generated by means of short-term operational forecasting, resulting from the interactions among the system components representing the reality. The operational forecasts allow foreseeing problems and opportunities at the execution level and adapting the planning in a way to keep it valid and effective throughout the process. The holonic online approach can be implemented for crop harvesting, or earth moving such as open-cast mine planning. The system can react to unexpected delays and faults, by properly adapting the planning. Also, it can improve cooperation between the mobile resources performing operations under dynamic operating conditions. The holonic online planning system is fully customizable for a variety of operating scenarios and complex cases of harvesting or mining, provided that the processing environment is modelled with the necessary level of details.

Such planning can now take into account unpredictable factors such as that the operating parameters of the vehicles may be adjusted at run time to operate them optimally with respect to the operating conditions and the characteristics of the work site. Runtime variations in the performance of one vehicle can influence the utilization of the other collaborating vehicle, and consequently affect the overall performance of the process. Moreover, unexpected operating conditions such as vehicle delay or breakdown and weather changes can also be taken into account.

### Some additional features

In some embodiments the work vehicles have intermittent communications with each other and each vehicle is arranged to operate autonomously according to their part of the overall schedule until they receive their part of the adapted overall schedule. This can enable the method to be used in worksites having a wider range of communication environments, such as those without continuous line of sight between all vehicles, for example farms in hilly areas, or with trees or hedges intervening, or in quarries or mines. Also it can enable less robust, cheaper shorter range wireless communications devices to be used.

The computer model can comprise model entities representing process knowledge about the operations including sequences of actions and what physical resources and parameters are available and/or used, the computer model also comprising model entities representing states of progress of the operations, and states of the physical resources including the ground being processed and the work vehicles. This modular type of model can enable optimized schedules to be found more efficiently and to be adapted more easily to match changes in the real world such as additions or changes to the worksite or to the vehicles.

The computer model can be distributed over a number of computers, at least the model entities representing states of the work vehicles being located at a computer on their respective work vehicle. This can enable the model entities to be kept up to date more easily and reliably, particularly if the communications between vehicles is intermittent. The running of the computer model can comprise the step of detecting and resolving conflicting requests for use of physical resources. This can be easier to resolve in the model stage than later during actual execution, and can lead to more efficient use of resources.

The running of the computer model can comprise the step of sending software agents to the model entities representing the states of the physical resources to discover availability of the physical resources for the candidate schedules. This is a particularly effective way of developing the candidate schedules, particularly if the model is modular and is distributed over different devices.

The generating of the overall schedule can comprise the steps of selecting from the candidate schedules and sending software agents to the model entities representing the states of the physical resources to reserve physical resources according to the selected candidate schedules.

At least some of the candidate schedules can comprise a representation of a two dimensional track of the proposed movement of the work vehicle over the ground to be processed.

### Introduction to some embodiments

An operational planning system for the coordinating engineering work vehicles involved in an outdoor engineering process is presented. The system optimizes the performance of the individual vehicles relative to their operating condition with the aim to improve the overall performance of the process.

The computer model of some embodiments can be composed of components corresponding to real world entities. Thus, these components reflect the resources in a processing environment, process knowledge and process orders. Operational planning is performed by coordination among the system components. The system allows concurrent planning and execution of the process; operational level disturbances detected can now be taken into account by the planning system, which intelligently updates the plan.

In some embodiments, all resources in a processing environment have a corresponding entity service module in the computer model. An entity service module provides the physical characteristics and the dynamic behaviour of a resource that is reflected by the corresponding resource component in the planning system. In some cases it can actively participate in the planning process and control the behaviour of the entity according to the operating instruction determined by the operational planning system.

The operational planning system can use a distributed heuristic to plan the operations of the coordinating engineering vehicles. During the planning phase, the entity service modules of the resources anticipate their future behaviour for processing an order. This information from the individual resources contributes in the formation of a solution for the coordinating engineering vehicles in a ground processing operation. The resulting plan can be arranged to have a limited life time and be refreshed periodically to keep it valid and optimal for execution. This mechanism is the basis to handle the disturbances and variations in the underlying processing environment.

As one of the basic functional requirements of a distributed operational planning system, a suitable communication mechanism is required to pass the planning and control information between computing resources and computer model components in the processing environment. Note that the computing resources in the operational planning system are able to store the planning information, which is refreshed only periodically and therefore, continuous communication among the system components is not necessary. This is particularly interesting for the outdoor engineering processes at the geographically distributed work site (or multiple sites) where continuous communication between the distributed resources is not feasible. Nevertheless, periodic information exchange among the system components is useful in order to monitor the progress of the process and adapt the planning for the changing circumstances over time.

In an outdoor engineering process, the actual performance of the engineering vehicles depends upon various factors including their runtime interaction with the other environment entities i.e., the work site and the collaborating vehicles. Improper performance of a vehicle and other variations in the operating environment can cause an engineering vehicle to deviate from its expected performance. This can lead to the disturbances in the operational plan. The forget-and-refresh mechanism of the planning information in the system enables to dynamically adjust the plan of the coordinating engineering vehicles, keeping it feasible and optimal at all times during the process.

A goal of the operational planning is to optimize the performance of the coordinating engineering with respect to the user defined planning objectives. In the operational planning system, a catalogue of performance criteria can be defined for an outdoor engineering process. A planning objective can be selected, changed or altered at runtime according to the progress of the process, which depends upon the interactions among the engineering vehicles and the operating environment. Also, the system allows the user to observe the run-time performance of the individual vehicles as well as the overall progress of the process. This information is used to evaluate the performance of the vehicles under the selected performance criterion. In case of the unexpected behaviour of one or more environment entities, necessary adjustments in the criterion can be made to minimize the impact of the disturbances on the overall progress of the process. Once the planning objectives are modified, the plan is updated to operate the vehicle according to the revised performance criterion.

The above capabilities of the operational planning system can help ensure the cost effective and timely execution of an outdoor engineering process. The system performs dynamic allocation of the process operations to the work vehicles in a manner such that improved utilization of the vehicles can be attained and the user requirements fulfilled in an optimal manner. Additionally, information from external sources can also be included in the system to assist the operational planning task. The external sources of information can include e.g., domain expert's opinion, data about weather forecast, site location characteristics and such like. The external knowledge can be incorporated in the planning and control stages and can further improve the quality of the solutions.

In some embodiments of the invention, the entity service modules of the moving planning environment resources, i.e., the engineering vehicles, are located on computers on the vehicles themselves. The entity service modules of the stationary resources, e.g., the work site, storage location and the road links can be located on one of the engineering vehicles or at a remote site. Furthermore, a planning environment entity is selected to host the coordination and control components (execution service module) of the planning system in addition to its own entity service module. The information exchange between the distributed components of the operational planning system results in the generation of the control instructions for the engineering vehicles. The communication between the system components can be achieved via a suitable (wireless) communication technology.

Examples of the method and the construction of the operational planning system together with its features and advantages are described in the following description of the figures. In order to provide an understanding of the system, its application on the crop harvesting process and on open cast mining is discussed. The applicability of the system is however broader. Generally, the system can be used for engineering processes outdoors where the conditions are hard to predict accurately and where effective coordination between engineering work vehicles is required for efficient completion of the process.

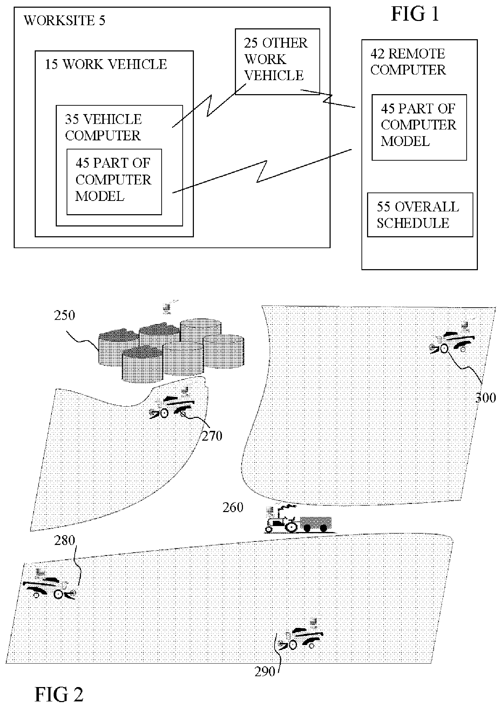

### Fig. 1. Schematic view of worksite

Figure 1 shows a schematic view of a worksite 5 and parts of a physically distributed operational planning system. A work vehicle 15 has a vehicle computer 35. The vehicle computer hosts part 45 of a computer model used for the operational planning. This vehicle computer is in communication with other work vehicles 25 (only one is shown for the sake of clarity, in practice there may be many). A remote computer 42 is shown which is in communication with the work vehicles and which has another part 45 of the computer model, and maintains at least a part of an overall schedule 55. The parts of the computer model may be held in a central location or may be distributed as shown.

### Fig. 2 Worksite in the form of a farm

Figure 2 shows a schematic perspective view of a crop harvesting environment where several harvest vehicles 270, 280, 290, 300, are operating in a neighbourhood of fields to harvest the crop and transport the product from the fields to a storage depot 250. Grain crops are typically gathered by combine harvesters. The harvested product is transferred to one or more tractor and trailer 260 every time the combine harvester's storage capacity is reached. The non-trivial planning requirements of the harvest vehicles in a harvesting campaign are addressed by an operational planning system.

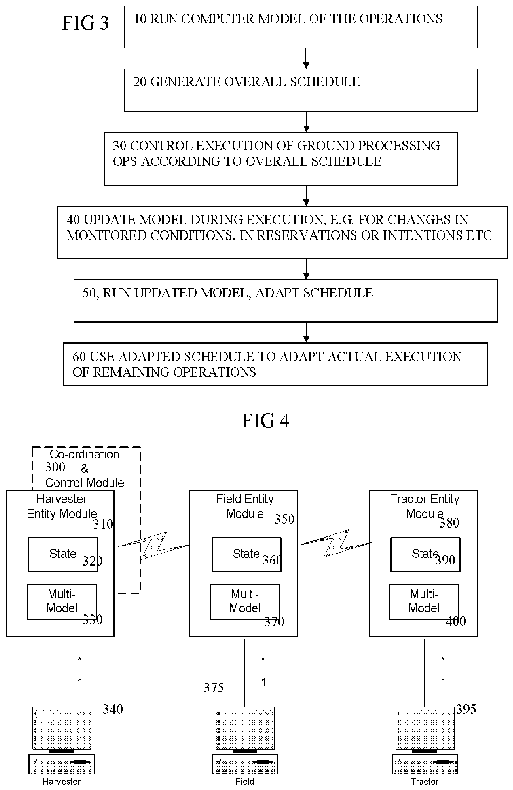

### Fig 3. Operational steps according to an embodiment.

Figure 3 shows some steps in the operation of the embodiment of claim 1, or other embodiments. At step 10, a computer model of the operation is run according to a possible schedule for each vehicle. Based on the results of running this model, at step 20, an overall schedule for multiple interacting vehicles is generated. This schedule can include for example a representation of a two dimensional track of the proposed movement of a harvest vehicle over one of the fields shown in Figure 2. There can be an opportunity here for a human operator to approve the selected schedule, or to choose from several good possibilities selected and presented by the system. At step 30, execution of the ground processing operations is controlled according to the overall schedule. This can involve for example presenting a visual display of the proposed track to the driver of the harvester, and the proposed timings and/or speed of movement. The model is updated (step 40) during execution according to changes in internal conditions (e.g. vehicle performance) or external conditions (e.g. weather, ground hardness, crop density, crop moisture level and so on) or reservations or user intentions for example.

This can be as a result of monitoring for example how much crop is harvested per square metre, or how fast the harvester moves, or how much fuel is used, or what is the actual track taken by the harvester and so on. At step 50, the updated model is run, and depending on the results, the schedule is adapted. There can be a bias to make the schedule more resistant to changing soon to be carried out actions, and to have more freedom to change actions further in the future. There can be an opportunity for an operator to approve changes or select from several good possibilities, selected and presented to the operator. The adapted schedule is used to adapt the actual execution of the remaining operations at step 60.

### Computer Model

In an example, the system can involve a computer model composed of components that correspond to reality. The components of the system can be arranged to represent the resources, the processing knowledge and the process order in the processing environment.

In a crop harvesting environment, the resources of concern are the harvest vehicles, crop fields, depot and the supporting infrastructure such as road links connecting the fields to the depot. The resources are modelled to represent their state and dynamic behaviour in the planning system.

The specific knowledge about the crop harvesting process and the operations of the harvest vehicles is included in the system component containing the processing knowledge. This component provides details about the harvest operations, the required sequence and the type of vehicles necessary for the execution of the operations. The operating instructions provided to the vehicles not only specify the operating parameter but also provide the directions vehicles need to follow during its operation. As the harvest vehicles often require precise routing guidelines in the crop harvesting process, a path planning method can be included as a plug-in to the system component. The path planning method can be customised for generating specific itineraries for the operations of the harvest vehicles.

The operations of the harvest vehicles in the crop harvesting process are managed by intelligent order entities in the system. The order entity, in coordination with the other system components, ensures correct and timely execution of required operations.

### Fig. 4. Distributed components of the operational planning system.

Each resource in the processing environment possesses an entity service module to represent the corresponding physical entity in the system. An entity service module of a resource comprises a resource state and the models of dynamics for the transitions in the state. Figure 4 illustrates the entity service modules corresponding to the resources in the crop harvesting environment, a harvester, a field having a crop, and a tractor pulling a trailer. Hence there is a harvester entity module 310, a field entity module 350, and a tractor entity module 380. The state of an entity provides a complete specification of the resource valid at one point in time. For example, the state 320 of a combine harvester specifies the vehicle dimension, grain tank capacity, speed settings and its current operation. Similarly, the state 360 of a crop field could define for example the ground condition, crop density, the grain moisture content and indicates the portion of the field that is already harvested. The state 390 of a tractor may specify its speed and the capacity of the trailer. The dynamic model of a resource specifies how its state changes over time and is also used to anticipate the future behaviour of an entity in the processing system. These are shown by the multi model 330 for the harvester, multi model 370 for the field entity, and multi model 400 for the tractor.

In the distributed processing environment, each moving as well as stationary environment entity requires a computing platform to host its respective entity service module. A computing platform may be realized as a computer equipped with a suitable communication devices to allow the information exchange among the environment entities.

Furthermore, the system components responsible for managing the execution tasks and providing technical information are hosted by the computing platform of one of the resources. The computing platform of the resource hosting these coordination and control modules (execution service module) in addition to its own entity service module is referred to as master platform, as also illustrated in Figure 4 by the coordination and control module 300 hosted by the harvester. The computing platforms 340, 395 of the moving entities i.e., the harvest vehicles are located on the vehicles themselves. For stationary entities, such as the crop fields and the depot, the computing platforms 375 can be either situated on one of the harvest vehicles or at a remote location.

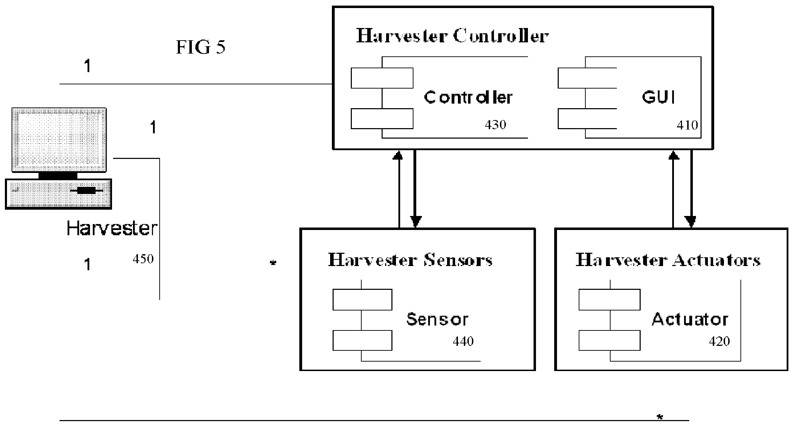

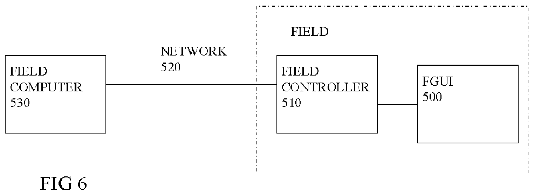

### Figs 5 and 6. Computing platforms for the moving and the stationary entities.

Figure 5 is a schematic illustration of the computing platform of a moving entity (i.e., an engineering vehicle) that hosts its component of the planning system. Figure 6 is a schematic illustration of the computing platform of a stationary entity (e.g., a storage location) that hosts its components of the planning system.

The computing platforms 450 for the moving entities i.e., harvest vehicles are further linked with the vehicle electronic consisting of sensors 440, actuators 420 and various electronic control units (ECUs) 430. This setup enables to exchange the monitoring and control information with the vehicle during the process. In addition, the vehicles are equipped with a suitable positioning system such as a GPS system (not illustrated) to determine their relative position in the field. A user interface GUI (Graphical User Interface) 410 may also be provided.

A field computing platform 530 may be coupled via a network 520 to a controller 510 and a user interface GUI 500 for example, also called a field GUI.

### Synchronization of the system components with real entities

The entity service modules of the resources need to remain synchronised with the actual evolving status of the resources during the process. In case of the harvest vehicles, this is achieved directly with the aid of the vehicle's monitoring systems. However, the remotely located modules of the field and the depot are updated indirectly with the aid of the operations information and other process information obtained from the vehicles altering their state. For instance, as a result of the crop harvesting operation, the state of the crop field is modified in addition to the change in the position and the grain tank content of the combine harvester. As a combine harvester traverses a field during the harvest operation, its position and grain tank content in its respective entity service module are updated with the aid of grain tank sensor (level sensor or grain flow sensor) and position data in the computing platform. At the same time, the combine harvester broadcasts the process information to the entity service module of the field in order to modify the field status.

### Operational planning

According to the invention, when certain crop fields are required to be harvested, the corresponding order is introduced in the operational planning system. This intelligent order initializes an active computing process that navigates in a virtual way across the resources to determine suitable processing solutions. In this process, each harvest vehicle anticipates its performance for the specified harvest operation. The harvest vehicles provide informed answers about their anticipated future. The status forecast of one vehicle provides the operation requirements for the collaborating harvest vehicle. For instance, the entity service of the harvester can forecast its future state for a harvest operation and determine the time and position in the field where it will have its grain tank completely filled with grain. This information is further used to plan the grain transfer operation of the tractor and the combine harvester. In the similar manner, all necessary operations of the coordinating harvest vehicles in the crop harvesting process are forecasted in a possible solution.

When several possibilities of completing the harvest process are available, the one which meets the objectives of the order in a best possible manner is selected for execution. The selected solution is confirmed to the involved resources, which reserve necessary capacities for the specified operations in their local schedules. Notice that the information stored by the resources has a limited life span and is refreshed regularly to keep it valid during the process. This 'forget and refresh' mechanism is the basic principle used to handle dynamics in systems.

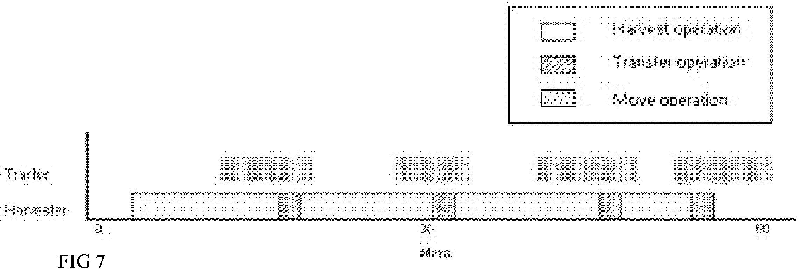

### Fig. 7. Graph of schedule maintained by the individual entities.

The entity service modules of the harvest vehicles in the planning system maintain their individual schedules of operations. Figure 7 shows a graph showing a snap shot of the local schedule of the combine harvester and the tractor trailer at a certain time during the process. The schedule of an individual harvest vehicle specifies the process operations for the vehicle and maintains their reservations over time. When the individual schedules of both, the combine harvester and tractor trailer are viewed together, the overall schedule of the process order during a certain period of time is obtained. However, this schedule is likely to evolve over time as the harvest vehicles often tend to deviate from the planning due various unforeseen disturbances in the operating environment.

The operational planning for the crop harvesting process aims to operate the vehicles optimally with respect to the user defined objectives for the process. However, the actual performance of a harvest vehicle depends upon its interaction with the other entities in the operating environment. For example, a planned operation of a combine harvester specifies suitable operating parameters, which were determined according to the predicted ground condition, crop density and grain moisture content of the crop field. At the time of execution, the variations in the predicated field condition can cause the vehicle to deviate from its expected performance. The inventive operation planning system deals with this situation by dynamically updating the plan of the coordinating harvesting vehicles. The updated plan provides suitable operating instructions to the vehicles according to the prevailing operating conditions. Additionally, the specifications of the crop field in its state model are updated with actual data collected during the harvesting process in order to minimize planning disturbances for the subsequent operations of the process.

Also, improper performance or failure of the individual vehicles negatively influences the performance of the coordinating harvest vehicle. In the planning system, alternate solutions are continuously explored (by the order holon explained below), searching at all times for better possibilities of completing the process. The reservations in the local schedules of the vehicles are updated mainly in two situations. Firstly, in case, the execution of an operation deviates from the planning. Secondly, when a better quality solution is discovered, which is possible e.g., when a broken down resource becomes functional again during the process. Hence, in all cases of operational level disturbances and variations, it is ensured that the operational plan for the coordinating vehicles remains feasible for execution.

The operational planning system performs dynamic vehicle assignment to optimize certain performance objectives. However, a problem in the planning of the crop harvesting process is that the performance objective cannot always be determined in advance due to the dynamic and distributed nature of the planning environment. Moreover, using a certain fixed criterion throughout the process does not guarantee meeting the objective of the efficient as well as cost effective operations. Different performance measures for the vehicles are, most of the time, conflicting in nature.

Improvement in one aspect of the process is counteracted by another. For example, energy efficient operations are achieved usually at expanse decreased productivity of the vehicle.

This can be taken into account by providing the user with a possibility of interacting with the planning system and selecting at runtime, a suitable planning objective to improve the overall performance of the process. Furthermore, the planning system also provides decision support for selecting a suitable planning objective for a process. All entities in the planning system can possess a capability to predict their future behaviour under a given set of conditions. Thus, for a selected planning objective, the performance of the individual vehicles and the overall performance of the process can be anticipated. A user can evaluate this performance information and select an objective best suited for the operating circumstances. For instance, during the grain transfer operation, if it is observed that earliest possible time at which a tractor and trailer can collaborate with the combine harvester is later than the required transfer time, an alternate performance criterion can be selected for the combine harvester. In this case, the combine harvester can be instructed to operate with the parameters minimizing the grain loss and the fuel consumption at the expense of a decreased harvesting rate. This capability of the system to perform trade-off optimization by observing the progress of the individual vehicles during the process and selecting suitable performance criterion enables an improvement in the overall performance of the process.

### Communication requirements

An important feature of some embodiments of the operational planning system is that it allows the harvest vehicle to continue their operations without having a need of continuous communication between the system components. This is particularly favourable for the crop harvesting process where a number of crop fields and the storage depot are geographically distributed. Under these conditions, continuous communication among the system components using a computer network is not possible and the communication using a public or private telecommunication network is often unaffordable. In the planning system, the operations of the coordinating engineering vehicles are managed by periodic information exchange between the system components. The frequency of the communication, however, depends upon the nature of the process and can be fine-tuned according to the characteristic of the operating environment.

The communication among the geographically distributed system components can be realised by the combination of a computer network (wireless LAN) and a telecommunication system (GPRS and GSM). A suitable communication system is selected (automatically at run time) according the information exchange requirements between the components of the system. For instance, if the communicating components are beyond wireless network range, then the periodic information exchange is achieved using the alternate system, comprising of the GPRS or GSM technology.

### System configuration

The distributed components of the operational planning system are hosted by computing platforms connected to communication networks. A computing platform can be a commercially available computer hardware with data input devices, a display system and communication devices to allow the information exchange between the distributed system components.

Furthermore, the computing platforms of the harvest vehicles are linked with the vehicle electronics, specifically, the vehicle sensors and actuators. This setup allows monitoring and control of the vehicles during their operations. Also, each vehicle is equipped with a positioning system to determine its relative position in this ground processing environment. The three dimensional positioning system of the vehicles can be a GPS technology, that provides position data on point by point basis with the accuracy in centimetres. Alternatively, a system such as dead reckoning or laser positioning can be used to locally determine the position of a vehicle relative to its operating environment. In the planning system, the entity services of the crop fields, road links and the depot are hosted by their respective computing platforms, which can be situated either on one of the harvest vehicles or at a remote location. These computing platforms actively participate in the planning and control process by exchanging the process data with the other system components.

During the process, the entity service module of each resource remains synchronised with the actual status of the resource. This is achieved with the aid of the monitoring systems of the harvest vehicles that secure the run time information about the vehicle's operating parameters and the crop field characteristics. The obtained information includes e.g., the position, speed setting and the grain tank content of the harvest vehicle. Also, the characteristics of the crop field specifying the soil condition, grain density, grain moisture content, obstacles in the field are determined by the monitoring system of the harvest vehicles. The entity service module of the harvest vehicles are updated directly with the runtime data secured by their computing platforms. Where as, the service modules of the static entities (i.e., the crop fields, depot) are updated with the process-specific data broadcasted by the computing platforms of the harvest vehicles whenever they alter a static resource.

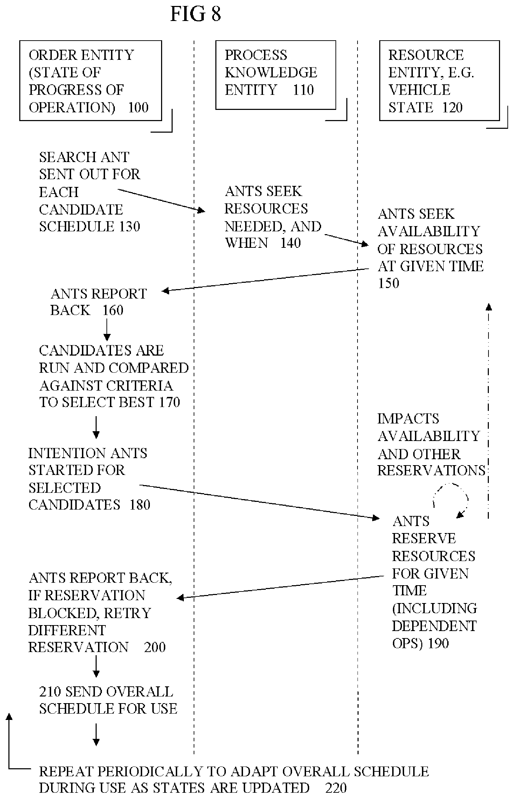

### Fig. 8. Time chart of actions of entities

Figure 8 shows a time chart with a sequence of actions or events in time order as shown by the arrows, and showing three columns to separate the actions of or relating to an order entity 100, a process knowledge entity 110, and a resource entity 120 respectively. These entities can be regarded as holons. The order entity represents a state of progress of the operation. A software agent called an ant, mentioned above in the discussion of holons, able to move from one processor to another, is initiated by the order entity to see what resources are needed and what are available. One or more such search ants can be sent out for each candidate schedule at step 130. The ants move to the process knowledge entity wherever that is hosted, and interrogate it at step 140 to find what actions or sub-operations need to be carried out to progress the overall operation, and what resources are needed. The ants can then move on to wherever the resource entities are hosted (typically on a processor on the resource, such as a harvester computer), to find availability of those resources at a given time at step 150. Each ant may have a list of different resources to visit to find availabilities, and report back to the order entity at step 160.

Based on the information from the ants about what needs to be done, and availabilities of resources, a computer model of each of the candidate schedules is run and results are compared against criteria at step 170, to select the best of them. Any resource conflicts can be resolved at this stage according to policies. The candidate schedules can be for one or several of the work vehicles. An overall schedule for all of the work vehicles is effectively created from the selected candidate schedules.

Then at step 180, other ants, called intention propagation ants are sent out for the selected candidate schedule or schedules, to the resource entities to reserve the resources needed at a given time (step 190). This can include ensuring that any dependent operations are also reserved successfully for the other work vehicle or vehicles involved. If the resource is no longer available, either because another ant has already reserved it, or because of changes in internal or external conditions affecting the resource, then another conflict resolution process can be followed, to mediate the conflict or find a next best option according to policies. This can be carried out by the order entity if the ant reports back that the reservation is blocked and why, at step 200. Once all reservations are complete, at step 210 the overall schedule can be sent out to all work vehicles for them to follow to carry out the actual ground processing operations. This planning process can be repeated periodically during use, as shown by step 220, as the internal and external conditions change and states of the resource entities are updated. If the repeat planning process produces an adapted overall schedule, this adapted overall schedule can be sent out and followed for the remainder of the actual ground processing operations.

### Creation of candidate schedule

The creation of candidate schedules can be carried out in various ways known to those skilled in the art. One way which addresses efficiency of the overall crop harvesting process via improved coordination between the agricultural vehicles is explained as follows. Two issues are important. The first issue is the determination of optimal covering tours for the combine harvesters operating in the field. The second issue is the identification of feasible positions for the grain transfer from the combine harvesters to tractor trailers. This planning problem can be modeled as an integer programming (IP) minimum-cost network flow problem with additional constraints enforced by the crop harvesting process. The IP model to solve the logistics planning problem of crop harvesting can be based on a minimum-cost network flow problem formulation (MCNFP). The MCNFP involves shipping a commodity through a single connected network, at a minimum cost, in a way that the total flow does not exceed the arc capacities (see R.K. Ahuja, T.L. Magnanti, J.B. Orlin, Network Flows: Theory, algorithms, and applications. Prentice-Hall, 1993).

### Outdoor Engineering examples

As has been described, for successful execution of an outdoor engineering process, a sufficient level of integration between planning and execution stages is necessary. The conflicts and opportunities at the execution level need to be identified and taken into account for the planning purposes. Moreover, continuous negotiations and compromises at the execution level are important for keeping the planning valid and effective throughout a process. To address the planning concerns of outdoor engineering processes, there is a focus on the following functionalities:
- Allocation of the process operations to engineering vehicles, with respect to their run-time performance information.
- Modification of sequence of operations aiming to minimize the effect of disturbances, e.g., weather, cooperation issues, on the utilization of resources. Thus, effectively utilizing unavoidable delays to plan and execute maintenance operations, worksite development etc.
- Selection of performance criteria, such as maximizing resource utilization, minimizing energy consumption etc., with respect to the progress of the process and environmental conditions (e.g. imminent storms).

The fundamental phases in the holonic online planning of an outdoor engineering process are described below:

### Exploration of planning solutions

In the holonic online planning system, the order holon represents process activities to be performed. It is responsible to get the operations executed with required resources in a way such that the processing requirements (due date, desired performance measures) are fulfilled. To explore possible solutions for completion of an order, the order holon uses delegate objects called exploring ants. The exploring ants are created at a suitable frequency for the order holon. An exploring ant, representing the state of the order *(the engineering process),* can virtually navigate across the resources *(the engineering vehicles*) in search of a solution. To accomplish its task, the exploring ant updates the state of the process to its corresponding product holon to know which operation should be performed next. The product holon evaluates the state information and defines a list of feasible next operations to the exploring ant, for the order holon. Once an appropriate operation is selected by the order holon, the exploring ant agent finds a suitable resource for its execution, in collaboration with the product agent.

Upon its arrival at the resource, the exploring ant queries it about its expected performance for executing the operation. More specifically, the exploring ant submits it's predicted arrival time to the resource and asks it about the execution results (finishing time and state) of the operation. The resource holon virtually executes the operation step and reports its performance to the exploring ant. The exploring ant records this information and consults again the product holon to know about the next required operation. In similar manner, all required operations of the process are virtually executed and the results are remembered by the exploring ant. At the end of the exploration activity (when the last operation step is virtually executed), the exploring ant compiles the results into a possible solution and reports it back to the order holon. Note that each exploring ant investigates the expected performance of one of the possible ways of completing the process.

### Selection of a planning solution

When the order holon has collected several solutions from a number of exploring ants, it evaluates them according to certain user defined performance criteria. Then, it selects one best performing solution that becomes the intention of the holon. The order holon confirms this solution to the resources i.e., the engineering vehicles indicated in the solution, by sending out another delegate object called intention propagation ant. Like exploring ants, intention propagation ants are also created at regular intervals. An intention ant confirms the chosen solution to the indicated resources. During this activity, each resource holon reserves the necessary capacity for the indicated operations. These reservations have a limited life span and need to be refreshed regularly to keep them valid for execution.

Note that the virtual execution by the resource holons accounts for the capacity reservations made by the intention ants. Therefore, both the exploration and intention propagation ants receive information from the resource holons that accounts for future (forecasted) interactions (e.g. congestions, waiting for a rendezvous, etc.).

### Plan execution and maintenance

In the holonic online planning mechanism, the solution exploration continues even after the order holon has indicated its intention to the resources. This allows the order holon to respond to disturbances (e.g., resource breakdowns or delays) or new opportunities (e.g., availability of additional resources) at the execution level. When during the execution the performance of the selected solution degrades or a better solution is found, the order holon has a tendency to shift to such better solutions. Importantly, in order to have useful planning, it must be ensured that reservations do not change too easily. Otherwise, minor disturbances like very brief delay in the arrival of a resource (an engineering vehicle) may cause shifting to an alternate solution, which can destabilize online planning. Proper design and tuning of the reservation altering mechanism can be addressed using known techniques. A threshold may be set so that the new adaptations can only be selected when perceived improvements are higher than that threshold value in terms of time or costs saved for example.

Open-cast mining process involves recovering commercially useful minerals by removing soil and rocks overlying the deposits. There are different scenarios under which the process is carried out. In one scenario, the valuable deposits are recovered with excavators and transferred to one or more storage bins located at the mine site. The excavated product is transported to either a storage location or a refining unit with the help of dump trucks every time the storage bin's capacity is reached. Since the operations of the mining vehicles are expensive, the profitability of the mine production depends directly on how effectively the mining vehicles are utilized during the process. For the planning of the open-cast mining process, two issues are important. The first issue is the dispatching of excavators to mines. The second issue is the assignment of the dump trucks for transportation of the excavated product from the mine site to a refining unit. The overall objective is to complete the process with efficient and economical utilization of the mining vehicles.

### System implementation

The present invention provides a holonic online planning system that can indeed improve the cooperation between the mining vehicles for their operations in the dynamic and distributed mining environment. For this purpose, a prototype planning system is implemented and tested for an open-cast mining scenario.

In the implementation of holonic online planning system, modelling the planning environment precedes planning and control stages. The environment represents the relevant entities of the real processing facility virtually in the planning system. It provides services to the planning system and plays an essential role in enabling coordination between the components of the system. Importantly, the environment itself does not have any decision making capabilities. It allows the system components to share information and reach to a mutual agreement for the operational planning decisions.

For modelling the system environment, the entities in the mining environment are structured along the PROSA holonic reference architecture. The resources of concern in the mining environment are the mine pits from where the material is extracted and the mining vehicles, i.e., the excavators and the dump trucks. These resources are represented in the system by their corresponding resource holons. The product holon is modelled to contain a basic level mine plan for example, with a recipe to perform the process. The task of mining along with the execution requirements e.g., start time and due-date is represented by the order holon. The resource, product and order holons thus constitute the processing environment of the open-cast mining process. All entities in the environment contain the models of their corresponding reality, which remain synchronised with the real entities throughout the process. The modelled environment provides a virtual planning world, which is also used for 'what-if' analysis for evaluating different planning strategies. One can select a certain performance objective for the process, and the local short-term forecasting capability of the system provides a view on its possible outcomes for execution. Furthermore, with this mechanism, the discrepancies between the planning and execution of a process are indicated. This enables the system to effectively respond to the inconsistencies and adapt the planning. Every entity in the holonic online planning system possesses a state that specifies its physical properties and characteristics. The dynamic behaviour of an entity is implemented using the multi-model approach. The multi-model is composed of several models, each specifying a process that can change the state of an entity (e.g., from idle to operating). The state transition in the multi-model is controlled with suitable boundary conditions that can be associated with each model. The boundary conditions specify when a model is valid. The multi-model formalism allows modelling a combination of discrete and continuous transitions to capture the dynamic behaviour of an entity.

The models are implemented with the necessary level details. Thus, a model for a discrete transition, e.g., activating or deactivating a resource, can be expressed with a simple process. In contrast, a model for continuous transition, e.g., excavation, can contain complex functional equations modelling the behaviour of the corresponding process. The entity models are used by their corresponding holons to determine answers during 'what-if' analysis. For example, when an excavator needs to perform an operation of moving to a certain position, it uses its sub-model (Moving) to determine the time required to reach to the position. This time is not fixed but it depends on the speed and the distance between the starting place and destination, among other things.

The holonic online planning is achieved by concurrent planning and execution of the operations of a process. This necessitates a mechanism for the planning system to interact with the processing environment at execution level. In the current embodiment, the real processing environment is replaced by an emulation system, asynchronously connected to the holonic online planning system. An emulation system consists of emulators of environment entities of the planning problem. The emulation depicts a stochastic behaviour with the underlying statistical models of variability and hence mirrors the real processing environment. In this way, the holonic online planning system, when connected to an emulation, cannot distinguish from being connected to the real processing environment. Therefore, replacing an emulation system with the real processing environment would not require great modifications in the control system. Connecting a real resource over a computer network however requires usually a significant amount of effort.

### Operational planning for open-cast mining

A scenario of open-cast mining with an excavator and a dump truck is considered. The excavator mines the material and dumps it into the storage bin situated next to the mine. Once the storage bin reaches its capacity, the dump truck arrives to unload the bin. Next, the dump truck transports the excavated material to the refining unit. Holonic online planning starts when the order to perform the mining process is introduced in the system. This triggers the creation of an order holon. The order holon initializes an active computing process that navigates across the resources first for planning and then for execution of the operations of the process. In the planning phase, each vehicle anticipates its performance for the specified mining operation. The operational forecast of one mining vehicle provides the planning requirements for the collaborating mining vehicle. For example, the excavator forecasts its future state for performing the excavation operation and determines the elapsed time to fill the storage bin. The forecast indicates the exact moment in time when the storage bin needs to be unloaded. This information is further used as one of the inputs for planning the operation of the dump truck. All operations to complete the specified mining order and the necessary cooperation among the vehicles are planned ahead identically for any possible solution. Such a solution indicates the time when an operation should start and finish, and the required mining vehicle. Also, the exact locations and time where the excavator requires cooperation from the dump truck to empty the storage bin are determined.

The solutions for the order are explored continuously at a certain frequency until the order is completed. When several possibilities for completing the mining process are available, the order holon evaluates them and selects the best one according to the criteria.The selected solution is confirmed to the involved resources by the order holon. Each resource holon maintains its load forecast of the reserved operations.

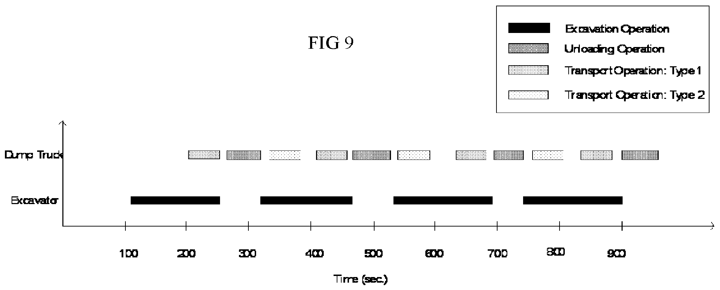

Figure 9 shows a graph showing a snap-shot of the load forecasts of the excavator and the dump truck involved in the mining process, over a time period shown as approximately 100 to 1000 seconds. The load forecast of the excavator shows the reservations (start and end times) for the 'excavation operations' required to complete the order. The load forecast of the dump truck has reservations for two types of operations. The first type represents the 'transport operations'. The dump truck performs the transport operations, firstly, in order to approach the storage bin and secondly to transport the excavated material from the mine site to the refining unit. The second type represents the unloading operations. This operation is performed by the dump truck to unload the storage bin. From the local schedules of the vehicles, it can be observed the dump truck starts its transport operation (see for example, transport operation, type 1: duration 200-255) for approaching the storage bin, in parallel with the excavation operation of the excavator. Furthermore, the dump truck makes itself available for unloading the storage bin at the exact moment when the excavator is ready with its operations (excavation operation: duration 115-255). During solution exploration, the excavator forecasts the moment in time when the bin will be filled up. This information is used by the dump truck, which plans its transport operation aiming to minimize the waiting time for the excavator. From the local schedules of the mining vehicles it can be observed that the operational planning method tends to improve utilization of the vehicles by improving cooperation between them.

Other variations can be envisaged by those skilled in the art, within the claims.

## Claims

1. A method of controlling outdoor ground processing operations of two or more work vehicles (15, 260, 270, 280, 290, 300), the method having the steps of:
- running (10) a computer model (100, 110, 120, 310, 350, 380) of the operations using a number of candidate schedules of the ground processing operations using predicted environmental conditions and predicted work vehicle performance, the operations involving movements and processing tasks of the work vehicles, at least one of the operations for one of the work vehicles (260) being a dependent operation, being dependent on at least one of the operations of another of the work vehicles (270), the computer model comprising entity service modules (380, 310) of the respective work vehicles (260, 270), the entity service modules comprising physical characteristics and a dynamic behavior of the respective work vehicles (260, 270) and being hosted in respective vehicle computers (395, 340) located on the respective work vehicles (270, 260) and wherein running (10) the computer model comprises running on the respective vehicle computers (395, 340) the respective entity service modules (380, 310) using one of the candidate schedules;
- generating (20) an overall schedule for the operations including the at least one dependent operation, based on the results of running the entity service modules (380, 310) of the respective working vehicles (260, 270);
- using the overall schedule to control (30) actual execution of the ground processing operations by the work vehicles;
- monitoring the actual execution of the ground processing operations; and
- updating (40) the computer model according to results of the monitoring of the actual execution.

2. A method according to claim 1, further comprising running the updated computer model according to further candidate schedules during the actual execution;
generating an adapted overall schedule (50) during the actual execution, according to results of running the updated computer model; and
using the adapted overall schedule to adapt the actual execution (60) of a remaining part of the ground processing operations.

3. The method of claim 1, the work vehicles (15, 260, 270, 280, 290, 300) having intermittent communications with each other and each being arranged to operate autonomously according to their part of the overall schedule until they receive their part of the adapted overall schedule.

4. The method of claim 1, 2 or 3, the computer model comprising model entities representing process knowledge (110) about the operations including sequences of actions and what physical resources and parameters are used, the computer model also comprising model entities representing states of progress of the operations (100), and states of the physical resources (120) including the ground being processed and the work vehicles.

5. The method of claim 4, the computer model being distributed over a number of computers (340, 375, 395), at least the model entities representing states of the work vehicles being located at a computer on their respective work vehicle.

6. The method of any preceding claim, the running of the computer model comprising the step (190, 200) of detecting and resolving conflicting requests for use of physical resources.

7. The method of claim 4 or 5, the running of the computer model comprising the step of sending software agents (130, 140, 150) to the model entities representing the states of the physical resources to discover availability of the physical resources for the candidate schedules.

8. The method of claim 7, the generating of the overall schedule comprising the steps of selecting (170) from the candidate schedules and sending software agents (180, 190) to the model entities representing the states of the physical resources to reserve physical resources according to the selected candidate schedules.

9. The method of any preceding claim, at least some of the candidate schedules comprising a representation of a two dimensional track of the proposed movement of the work vehicle over the ground to be processed.

10. Computer readable media having instructions which, when executed by one or more computers, cause the method of any preceding claim to be carried out.

11. An operational planning system for controlling outdoor ground processing operations of two or more work vehicles (15, 260, 270, 280, 290, 300), the system having:
multiple computers (340, 375, 395) arranged to run a computer model (100, 110, 120, 310, 360, 380) of the operations using a number of candidate schedules of the ground processing operations using predicted environmental conditions and predicted work vehicle performance, the operations involving movements and processing tasks of the work vehicles, at least one of the operations for one of the work vehicles (260) being a dependent operation, being dependent on at least one of the operations of another of the work vehicles (270), the computer model comprising entity service modules (380, 310) of the respective work vehicles (260, 270), the entity service modules comprising physical characteristics and a dynamic behavior of the respective work vehicles,
at least two of the computers (395, 340) being located on respective ones of the work vehicles (260, 270) and hosting their respective entity service modules (380, 310), said at least two of the computers being arranged to run their respective entity service module using one of the candidate schedules,
one of the computers (300) being arranged to generate an overall schedule (20) for the operations including the at least one dependent operation, based on the results of running the entity service modules (380, 310) on the respective working vehicles (260, 270); and
a communications link for sending the overall schedule to the work vehicles to control actual execution of the ground processing operations by the work vehicles, the computers being operative to update the computer model during the actual execution depending on the results of the monitoring of the actual execution of the ground processing operations.

12. An operational planning system according to claim 11, wherein the computers (340, 375, 395) are arranged to run the updated computer model according to further candidate schedules during the actual execution, and to generate an adapted overall schedule during the actual execution, according to results of running the updated computer model, and to use the adapted overall schedule to adapt the actual execution of a remaining part of the ground processing operations.

13. The operational planning system of claim 11, the computer model comprising model entities representing process knowledge (110) about the operations including sequences of actions and what physical resources and parameters are used, the computer model also comprising model entities representing states of progress of the operations (100), and states of the physical resources (120) including the ground being processed and the work vehicles.

14. A work vehicle (15, 260, 270, 280, 290, 300) for use in the operational planning system of claim 11, the work vehicle comprising one of the at least two computers (395, 340) for running its respective entity service module (380, 310) comprised in the computer model of the operational planning system, wherein the results of the running of the respective entity service module is used to generate the overall schedule (20) of the operational planning system.

## Patentansprüche

1. Verfahren zum Steuern von Freiluft-Bodenbearbeitungsarbeiten zweier oder mehrerer Arbeitsfahrzeuge (15, 260, 270, 280, 290, 300), wobei das Verfahren die Schritte umfasst:
- Ausführen (10) eines Computermodells (100, 110, 120, 310, 350, 380) der Arbeiten unter Verwendung einer Anzahl von potentiellen Abläufen der Bodenbearbeitungsarbeiten unter Verwendung vorhergesagter Umweltbedingungen und vorhergesagte Arbeitsfahrzeugverhaltens, wobei die Arbeiten Bewegungen und Bearbeitungsaufgaben der Arbeitsfahrzeuge beinhalten, wobei zumindest eine der Arbeiten eines der Arbeitsfahrzeuge (260) eine abhängige Arbeit ist, die von zumindest einer der Arbeiten der anderen Arbeitsfahrzeuge (270) abhängt, wobei das Computermodell Einheitenservicemodule (380, 310) der entsprechenden Arbeitsfahrzeuge (260, 270) umfasst, wobei die Einheitenservicemodule physikalische Eigenschaften und ein dynamisches Verhalten des jeweiligen Arbeitsfahrzeugs (260, 270) umfassen, und im jeweiligen Fahrzeugcomputer (395, 340) betrieben werden, der auf dem jeweiligen Arbeitsfahrzeug (270, 260) angeordnet ist; und
wobei das Ausführen (10) des Computermodells das Ausführen der jeweiligen Einheitenservicemodule (380, 310) auf den jeweiligen Fahrzeugcomputern (395, 340) unter Verwendung der potentiellen Abläufe umfasst;
- Erzeugen (20) eines Gesamtablaufs für die Arbeiten einschließlich der zumindest einen abhängigen Arbeit basierend auf den Ergebnissen des Ausführens der Einheitenservicemodule (380, 310) der jeweiligen Arbeitsfahrzeuge (260, 270);
- Verwenden des Gesamtablaufs zum Steuern (30) der tatsächlichen Ausführung der Bodenbearbeitungsarbeiten durch die Arbeitsfahrzeuge;
- Überwachen der tatsächlichen Ausführung der Bodenbearbeitungsarbeiten; und
- Aktualisieren (40) des Computermodells gemäß den Ergebnissen des Überwachens der tatsächlichen Ausführung.

2. Verfahren nach Anspruch 1, weiterhin umfassend das Ausführen des aktualisierten Computermodells gemäß weiterer potentieller Abläufe während der tatsächlichen Ausführung;
Erzeugen eines angepassten Gesamtablaufs (50) während der tatsächlichen Ausführung gemäß den Ergebnissen des Ausführens des aktualisierten Computermodells; und
Verwenden des angepassten Gesamtablaufs zum Anpassen der tatsächlichen Ausführung (60) für einen verbleibenden Teil der Bodenbearbeitungsarbeiten.

3. Verfahren nach Anspruch 1, wobei die Arbeitsfahrzeuge (15, 260, 270, 280, 290, 300) eine intermittierende Kommunikation untereinander aufweisen und jeweils dazu eingerichtet sind, autonom gemäß ihres Teils des Gesamtablaufs zu arbeiten, bis sie ihren Teil des aktualisierten Gesamtablaufs erhalten.

4. Verfahren nach Anspruch 1, 2 oder 3, wobei das Computermodell Modelleinheiten umfasst, die Prozesskenntnisse (110) über die Arbeiten abbilden, einschließlich der Reihenfolge von Handlungen und welche physikalischen Ressourcen und Parameter verwendet werden, wobei das Computermodell auch Modelleinheiten umfasst, die Zustände des Fortschritts der Arbeiten (100) und Zustände der physikalischen Ressourcen (120) einschließlich des Bodens, der bearbeitet wird, und der Arbeitsfahrzeuge abbilden.

5. Verfahren nach Anspruch 4, wobei das Computermodell über eine Anzahl von Computern (340, 375, 395) verteilt ist, wobei zumindest die Modelleinheiten Zustände der Arbeitsfahrzeuge abbilden, die auf einem Computer auf ihrem jeweiligen Arbeitsfahrzeug lokalisiert sind.

6. Verfahren nach einem der vorangehenden Ansprüche, wobei das Betreiben des Computermodells den Schritt (190, 200) des Erfassens und Lösens widersprüchlicher Aufträge zur Verwendung physikalischer Ressourcen umfasst.

7. Verfahren nach Anspruch 4 oder 5, wobei das Ausführen des Computermodells den Schritt des Sendens von Software-Agenten (130, 140, 150) an die Modelleinheiten umfasst, die die Zustände der physikalischen Ressourcen abbilden, um die Verfügbarkeit der physikalischen Ressourcen für die potentiellen Abläufe herauszufinden.

8. Verfahren nach Anspruch 7, wobei das Erzeugen des Gesamtablaufs die Schritte des Auswählens (170) aus den potentiellen Abläufen und des Sendens von Software-Agenten (180, 190) an die Modelleinheiten umfasst, die die Zustände der physikalischen Ressourcen abbilden, um physikalische Ressourcen gemäß der gewählten potentiellen Abläufe zu reservieren.

9. Verfahren nach einem der vorangehenden Ansprüche, wobei zumindest einige der potentiellen Abläufe eine Abbildung einer zweidimensionalen Fahrspur der vorgeschlagenen Bewegung des Arbeitsfahrzeugs über den zu bearbeitenden Boden umfassen.

10. Computerlesbare Medien mit Anweisungen, die das Ausführen des Verfahrens nach einem der vorangehenden Ansprüche veranlassen, wenn sie von einem oder mehreren Computern ausgeführt werden.

11. Betriebsplanungssystem zum Steuern von Freiluft-Bodenbearbeitungsarbeiten zweier oder mehrerer Arbeitsfahrzeuge (15, 260, 270, 280, 290, 300), wobei das System umfasst:
eine Mehrzahl von Computern (340, 375, 395), die dazu eingerichtet sind, ein Computermodell (100, 110, 120, 310, 360, 380) von Arbeiten unter Verwendung einer Anzahl von potentiellen Abläufen der Bodenbearbeitungsarbeiten unter Verwendung vorhergesagter Umweltbedingungen und vorhergesagten Arbeitsfahrzeugverhaltens auszuführen, wobei die Arbeiten Bewegungen und das Bearbeitungsaufgaben der Arbeitsfahrzeuge beinhalten, wobei zumindest eine der Arbeiten für eines der Arbeitsfahrzeuge (260) eine abhängige Arbeit ist, die von zumindest einer der Arbeiten der anderen Arbeitsfahrzeuge (270) abhängt, wobei das Computermodell Einheitenservicemodule (380, 310) der jeweiligen Arbeitsfahrzeuge (260, 270) umfasst, wobei die Einheitenservicemodule physikalische Eigenschaften und ein dynamisches Verhalten des jeweiligen Arbeitsfahrzeugs umfassen,
wobei zumindest zwei der Computer (395, 340) auf dem jeweiligen Arbeitsfahrzeug (260, 270) angeordnet sind und ihr jeweiliges Einheitenservicemodule (380, 310) betreiben, wobei die zumindest zwei Computer dazu eingerichtet sind, ihre entsprechenden Einheitenservicemodule unter Verwendung eines der potentiellen Abläufe auszuführen,
wobei einer der Computer (300) dazu eingerichtet ist, einen Gesamtablauf (20) für die Arbeiten einschließlich der zumindest einen abhängigen Arbeit basierend auf den Ergebnissen des Ausführens der Einheitenservicemodule (380, 310) auf den jeweiligen Arbeitsfahrzeugen (260, 270) zu erzeugen; und
eine Kommunikationsverbindung zum Senden des Gesamtablaufs an die Arbeitsfahrzeuge zum Steuern der tatsächlichen Ausführung der Bodenbearbeitungsarbeiten durch die Arbeitsfahrzeuge, wobei die Computer betreibbar sind, um das Computermodell während der tatsächlichen Ausführung in Abhängigkeit der Ergebnisse des Überwachens der tatsächlichen Ausführung der Bodenbearbeitungsarbeiten zu aktualisieren.

12. Betriebsplanungssystem nach Anspruch 11, wobei die Computer (340, 375, 395) dazu eingerichtet sind, das aktualisierte Computermodell gemäß weiterer potentieller Abläufe während der tatsächlichen Ausführung auszuführen, und einen angepassten Gesamtablauf während der tatsächlichen Ausführung gemäß der Ergebnisse des Ausführens des aktualisierten Computermodells zu erzeugen, und den angepassten Gesamtablauf zu verwenden, um die tatsächliche Ausführung eines verbleibenden Teils der Bodenbearbeitungsarbeiten anzupassen.

13. Betriebsplanungssystem nach Anspruch 11, wobei das Computermodell Modelleinheiten umfasst, die Prozesskenntnisse (110) über die Arbeiten umfasst, einschließlich der Reihenfolge von Tätigkeiten und welche physikalischen Ressourcen und Parameter verwendet werden, wobei das Computermodell auch Modelleinheiten umfasst, die Zustände des Fortschritts der Arbeiten (100) und Zustände der physikalischen Ressourcen (120) einschließlich des Bodens, der bearbeitet wird, und des Arbeitsfahrzeugs abzubilden.

14. Arbeitsfahrzeug (15, 260, 270, 280, 290, 300) zum Verwenden in einem Betriebsplanungssystem nach Anspruch 11, wobei das Arbeitsfahrzeug einen der zumindest zwei Computer (395, 340) zum Ausführen seines entsprechenden Einheitenservicemoduls (380, 310) umfasst, das im Computermodell des Betriebsplanungssystems umfasst ist, wobei die Ergebnisse des Ausführens des entsprechenden Einheitenservicemoduls verwendet werden, um den Gesamtablauf (20) des Betriebsplanungssystems zu erzeugen.

## Revendications

1. Procédé de commande d'opérations de traitement au sol à l'extérieur de deux ou plusieurs véhicules (15, 260, 270, 280, 290, 300), le procédé comprenant les étapes consistant à :
- dérouler (10) un modèle informatique (100, 110, 120, 310, 350, 380) des opérations en utilisant plusieurs calendriers candidats des opérations de traitement sur sol et en utilisant des conditions environnementales prédites et des performances de véhicule de travail prédites, les opérations impliquant des tâches de déplacement et de traitement des véhicules de travail, au moins l'une des opérations pour un des véhicules de travail (260) étant une opération dépendante dépendant d'au moins une des opérations d'un autre des véhicules de travail (270, le modèle informatique comprenant des modules de service d'entité (380, 310) des véhicules de travail respectifs (260, 270), les modules de service d'entité comprenant des caractéristiques physiques et un comportement dynamique des véhicules de travail respectifs (260, 270) et étant hébergés dans des ordinateurs respectifs de véhicule (395, 340) situés sur les véhicules de travail respectifs (270, 260), et
le déroulement (10) du modèle informatique comprenant le déroulement sur les ordinateurs respectifs de véhicule (395, 340) des modules de service d'entité (380, 310) respectifs en utilisant un des calendriers respectifs,
- générer (20) un calendrier global pour les opérations incluant la au moins une opération dépendante, en fonction des résultats du déroulement des modules de service d'entité (380, 310) des véhicules de travail respectifs (260, 270),
- utiliser le calendrier global pour commander (30) l'exécution réelle des opérations de traitement au sol par les véhicules de travail,
- surveiller l'exécution réelle des opérations de traitement sur sol, et
- mettre à jour (40) le modèle informatique conformément aux résultats de la surveillance de l'exécution réelle.

2. Procédé selon la revendication 1, comprenant en outre le déroulement du modèle informatique mis à jour selon d'autres calendriers candidats pendant l'exécution réelle,
- la génération d'un calendrier global adapté (50) pendant l'exécution réelle, conformément aux résultats du déroulement du modèle informatique mis à jour, et
- l'utilisation du calendrier candidat adapté pour adapter l'exécution réelle (60) d'une partie restante des opérations de traitement sur sol.

3. Procédé selon la revendication 1, les véhicules de travail (15, 260, 270, 280, 290, 300) ayant des communications intermittentes l'un avec l'autre et étant chacun agencés pour fonctionner de façon autonome conformément à leur partie du calendrier global jusqu'à ce qu'ils reçoivent leur partie du calendrier global adapté.

4. Procédé selon la revendication 1, 2 ou 3, le modèle informatique comprenant des entités de modèle représentant une connaissance du processus (110) sur les opérations incluant des séquences d'actions et quelles ressources et paramètres physiques sont utilisés, le modèle informatique comprenant aussi des entités de modèle représentant des états d'avancement des opérations (110) et des états des ressources physiques (120) incluant le sol traité et les véhicules de travail.

5. Procédé selon la revendication 4, le modèle informatique étant distribué sur plusieurs ordinateurs (340, 375, 395), au moins les entités de modèle représentant des états des véhicules de travail étant situées sur un ordinateur sur leur véhicule de travail respectif.

6. Procédé selon l'une quelconque des revendications précédentes, le déroulement du modèle informatique comprenant l'étape (190, 200) consistant à détecter et à résoudre des demandes contradictoires sur l'utilisation des ressources physiques.

7. Procédé selon la revendication 4 ou 5, le déroulement du modèle informatique comprenant l'étape consistant à envoyer des agents logiciels (130, 140, 150) aux entités de modèle représentant les états des ressources physiques afin de découvrir les ressources physiques pour les calendriers candidats.

8. Procédé selon la revendication 7, la génération du calendrier global comprenant les étapes consistant à sélectionner (170) parmi les calendriers candidats et envoyer des agents logiciels (180, 190) aux entités de modèle représentant les états des ressources physiques afin de réserver des ressources physiques en fonction des calendriers candidats sélectionnés.

9. Procédé selon l'une quelconque des revendications précédentes, au moins certains des calendriers candidats comprenant une représentation d'une trajectoire à deux dimensions du déplacement proposé du véhicule de travail sur le sol à traiter.

10. Support lisible par ordinateur comprenant des instructions qui, lorsqu'elles sont exécutées par un ou plusieurs ordinateurs, engendrent l'exécution du procédé selon l'une quelconque des revendications précédentes.

11. Système de planification des opérations pour commander des opérations de traitement du sol à l'extérieur de deux ou plusieurs véhicules de travail (15, 260, 270,280, 290, 300), le système comportant :
des ordinateurs multiples (340, 375, 395) agencés pour dérouler un modèle informatique (100, 110, 120, 310, 360, 380) des opérations en utilisant plusieurs calendriers candidats des opérations de traitement du sol et en utilisant des conditions environnementales prévues et des performances de véhicule de travail prévues, les opérations impliquant des déplacements et des tâches de traitement des véhicules de travail, au moins une des opérations pour un des véhicules de travail (260) étant une opération dépendante dépendant d'au moins une des opérations d'un autre des véhicules de travail (270, le modèle informatique comprenant des modules de service d'entité (380, 310) des véhicules de travail respectifs (260, 270), les modules de service d'entité comprenant des caractéristiques physiques et un comportement dynamique des véhicules de travail respectifs,
au moins deux des ordinateurs (395, 340) étant situés sur des véhicules de travail respectifs (260, 270) et hébergeant leurs modules de service d'entité respectifs (380, 310), lesdits au moins deux des ordinateurs étant agencés pour dérouler leurs modules de service d'entité respectif en utilisant l'un des calendriers candidats,
- l'un des ordinateurs (300) étant agencé pour générer un calendrier global (20) pour les opérations incluant la au moins une opération dépendante, en fonction des résultats du déroulement des modules de service d'entité (380, 310) sur les véhicules de travail respectifs (260, 270), et
une liaison de communication pour envoyer le calendrier global aux véhicules de travail afin de commander l'exécution réelle des opérations de traitement au sol par les véhicules de travail, les ordinateurs étant fonctionnels pour mettre à jour le modèle informatique durant l'exécution réelle en fonction des résultats de la surveillance de l'exécution réelle des opérations de traitement au sol.

12. Système de planification des opérations selon la revendication 11, dans lequel les ordinateurs (340, 375, 395) sont agencés de façon à dérouler le modèle informatique mis à jour selon d'autres calendriers candidats pendant l'exécution réelle, et pour générer un calendrier global adapté pendant l'exécution réelle, en fonction des résultats du déroulement du modèle informatique mis à jour, et de façon à utiliser le calendrier global adapté pour adapter l'exécution réelle d'une partie restante des opérations de traitement au sol.

13. Système de planification des opérations selon la revendications 11, le modèle informatique comprenant des entités de modèle représentant une connaissance du processus (110) sur des opérations incluant des séquences d'actions et quelles ressources physiques et paramètres sont utilisés, le modèle informatique comprenant en outre des entités de modèle représentant des états d'avancement des opérations (100), et des états des ressources physiques (120) incluant le sol en train d'être traité et les véhicules de travail.

14. Véhicule de travail (15, 260, 270, 280, 290, 300) destiné à être utilisé dans le système de planification d'opérations selon la revendication 11, le véhicule de travail comprenant un des au moins deux ordinateurs (395, 340) pour dérouler son module de service d'entité respectif (380, 310) compris dans le modèle informatique du système de planification d'opérations, dans lequel les résultats du déroulement du module de service d'entité respectif sont utilisés pour générer le calendrier global (20) du système de planification d'opérations.
